# EUROPEAN PATENT APPLICATION

(11) **EP 4 843 388 A1**
(43) Date of publication of application: **25.11.2026**
(21) Application number: 25178458.3
(22) Date of filing: 23.05.2025
(51) Int. Cl.: A01N 43/54, A01N 25/04, A01P 13/00

(54) **COMPOSITIONS COMPRISING A PROTOPORPHYRINOGEN OXIDASE INHIBITOR HERBICIDE AND A PHOSPHATE ESTER**

(71) Applicant: BASF Agricultural Solutions Deutschland GmbH, 67117 Limburgerhof (DE)
(72) Inventor: POPP, Christian, 79650 Schopfheim (DE); SCHWABEN, Tobias, 67117 Limburgerhof (DE); BOWE, Steven Joseph, Burham, North Carolina 27709-3528 (US); MALANG, Ulrike, 67117 Limburgerhof (DE); SIMON, Anja, 67117 Limburgerhof (DE)
(74) Representative: Meissner Bolte Partnerschaft mbB

(57) **Abstract**

The present invention relates to a composition comprising at least one protoporphyrinogen oxidase (PPO) inhibitor herbicide and at least one phosphate ester of formula (I) 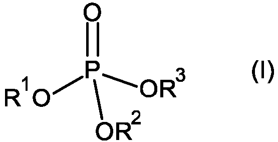 where R³, R² and R³ are as defined in the claims and the description;
to the use said the composition for combatting undesired vegetation and to a method of combatting undesired vegetation, comprising applying said composition to plants, their seed and/or their habitat. The invention relates moreover to the use of said phosphate ester (I) for improving the herbicidal activity of a PPO inhibitor, and to the use of a phosphate ester (I) for improving the drop stability and/or homogeneity in a spray prepared from an aqueous composition comprising the PPO inhibitor.

## Description

The present invention relates to a composition comprising at least one protoporphyrinogen oxidase (PPO) inhibitor herbicide and at least one phosphate ester of formula (I) as defined below, to the use thereof for combatting undesired vegetation and to a method of combatting undesired vegetation, comprising applying said composition to plants, their seed and/or their habitat. The invention relates moreover to the use of a phosphate ester (I) for improving the herbicidal activity of a PPO inhibitor, and to the use of a phosphate ester (I) for improving the drop stability and/or homogeneity in a spray prepared from an aqueous composition comprising the PPO inhibitor and to the use thereof.

### TECHNICAL BACKGROUND

Protoporphyrinogen oxidase inhibitors (PPO inhibitors; PPOls) are a widespread class of contact herbicides usually applied as foliar sprays.

As a rule, herbicides (actually crop protection agents in general) are not applied in pure form by the end user (e.g. the farmer), but in form of a formulation. The final application forms of herbicides, in particular if these are liquid, more specifically aqueous application forms, often contain adjuvants, especially if foliar application is intended. Adjuvants in this context are substances which enhance the biological activity of the active ingredient without having any noteworthy biological (here: herbicidal) activity of their own. They often act as chemical enhancers, i.e. they improve the penetration rate of the active ingredient (also termed active agent) through the plant cuticle, or exert other physico-chemical properties which allow a high concentration of active substance to arrive and/or stay at the site of action in/on the plant, e.g. by providing an enhanced spray retention.

Since in many cases adjuvants are not compatible with active ingredients in concentrated coformulations, they often come into contact with the active ingredients only in the tank mixes or spray liquors, to which they are added separately from the active ingredient. This is however more cumbersome than adding a coformulation containing both the active ingredient and adjuvant, since a further mixing step, more shelving place and more planning in general is required.

In oily formulations, such as oil dispersions, oil-in-water emulsions or emulsifiable concentrates, the oily components often act both as continuous phase (i.e. as dispersant for the active ingredient) and, due to their lipophilic character, as adjuvant.

Typical oils for these formulation types are mineral oils, seed oils or transesterified (often methylated or also ethylated) seed oils. However, the concentration of the active ingredients in these formulations is rather low (or, inversely expressed, the concentration of the oily component is rather high) to enhance the stability of the formulation and/or a sufficient adjuvant effect on the plant surface.

It is desirable to lower the concentration of the oily component (or, inversely expressed, to enhance the concentration of the active ingredients) without impairing the stability of the formulation and the adjuvant effect thereof on the plant surface.

Due to environmental concerns and also out of economic reasons, smart agriculture technologies, such as precision agriculture, become more and more important. Smart agriculture includes the application of active ingredients on the precise spot in the field requiring treatment. Precision farming typically includes the use of smart spraying equipment, e.g. for spot spraying. Smart spraying equipment, in turn, requires active ingredient formulations which live up to the high requirements of spot treatment. The formulations need to be stable and very uniform to allow a sufficiently constant concentration of the active ingredient in every droplet, and the droplets formed from the formulation need to have an optimum droplet size to show no or just small wind drift from the spot.

The object of the present invention was to provide an adjuvant for PPOI herbicides which should effectively improve the herbicidal activity of the PPOI. The adjuvant should be suitable as an in-built adjuvant, i.e. it should allow co-formulations with the herbicide in a concentrated composition (concentrated meaning in this context a composition containing the active ingredient(s) and the adjuvant(s) in a higher concentration than a tank mix or spray liquor). Additionally or alternatively, formulations containing one or more PPOI herbicides and one or more adjuvants should be suitable for smart farming, especially for application with smart spraying equipment, e.g. with equipment for spot spraying.

### SUMMARY OF THE INVENTION

As was found by the present inventors, trialkylphosphates are suitable adjuvants for PPOI herbicides. They form stable formulations, also when used as in-built adjuvants, also when used in lower concentrations than customarily in mineral oil-, seed oil- or transesterified (e.g. methylated or ethylated) seed oil-based formulations; and effectively enhance the herbicidal activity of PPOls.

The invention thus relates to a composition comprising
(a) at least one herbicide selected from protoporphyrinogen oxidase (PPO) inhibitors; and
(b) at least one phosphate ester or the formula (I) 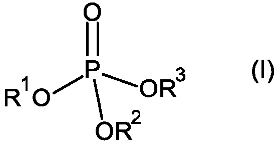
where R³, R² and R³, independently of each other, are C₆-C₁₂-alkyl.

The invention relates moreover to the use of said composition for combatting unwanted vegetation, and to a method of combatting unwanted vegetation, comprising applying said composition to plants, their seed and/or their habitat.

The invention relates also to the use of a phosphate ester of formula (I) for improving the herbicidal activity of a PPO inhibitor, and to the use of said phosphate ester of formula (I) for improving the drop stability and/or homogeneity in a spray prepared from an aqueous composition comprising a PPO inhibitor.

### DETAILED DESCRIPTION OF THE INVENTION

### Definitions

PPO stands for protoporphyrinogen oxidase. PPOI stands for protoporphyrinogen oxidase inhibitor.

As already explained above, adjuvants in terms of the present invention are substances which enhance the biological activity of the active ingredient (here: the herbicidal activity of the PPOI herbicide) without having any noteworthy biological (here: herbicidal) activity of their own. They often act as chemical enhancers, i.e. they improve the penetration rate of the active ingredient through the plant cuticle, or they exert other physicochemical properties which allow a high concentration of active substance to arrive and/or stay at the site of action in/on the plant, such as an enhanced spray retention.

"Liquid" as a characteristic of the composition of the invention means that the composition has, under standard conditions (25°C, 1013 mbar), a dynamic viscosity of, as a rule, no more than 1000 mPa•s, preferably of no more than 500 mPa•s, more preferably of no more than 250 mPa•s, determined as specified in ASTM D 445.

Alkyl is used in the usual sense and stands for saturated straight-chain or branched aliphatic non-cyclic hydrocarbon radicals having the indicated number of carbon atoms. Thus C₆-C₁₂-alkyl stands for an alkyl group having 6 to 12 carbon atoms. Examples for C₆-C₁₂-alkyl are n-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, n-heptyl, n-octyl, 2-ethylhexyl, n-nonyl, n-decyl, 2-propylheptyl, n-undecyl, n-dodecyl, and (other) positional isomers thereof.

Suitable as PPO inhibitors are those known in the art, preference being given to PPO inhibitors selected from the group consisting of acifluorfen, acifluorfen-sodium, azafenidin, bencarbazone, benzfendizone, bifenox, butafenacil, carfentrazone, carfentrazone-ethyl, chlomethoxyfen, chlorphthalim, cinidon-ethyl, cyclopyranil, fluazolate, flufenpyr, flufenpyr-ethyl, flumiclorac, flumiclorac-pentyl, flumioxazin, fluoroglycofen, fluoroglycofen-ethyl, fluthiacet, fluthiacet-methyl, fomesafen, halosafen, lactofen, oxadiargyl, oxadiazon, oxyfluorfen, pentoxazone, profluazol, pyraclonil, pyraflufen, pyraflufen-ethyl, saflufenacil, sulfentrazone, thidiazimin, tiafenacil, trifludimoxazin, epyrifenacil, N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0), 1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0), methyl (*E*)-4-[2-chloro-5-[4-chloro-5-(difluoromethoxy)-1*H*-methyl-pyrazol-3-yl]-4-fluoro-phenoxy]-3-methoxy-but-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4); 2-[2-chloro-5-[3-chloro-5-(trifluoromethyl)-2-pyridinyl]-4-fluorophenoxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol- 1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1), 3-[2-chloro-5-[3,6-dihydro-3-methyl-2,6-dioxo-4-(trifluoromethyl)-1(2H)-pyrimidinyl]-4-fluorophenyl]-4,5-dihydro-5-methyl-5-isoxazolecarboxylic acid ethyl ester (CAS 1949837-17-5), and mixtures thereof.

More preferably, the PPO inhibitor is selected from the group consisting of azafenidin, bencarbazone, benzfendizone, butafenacil, carfentrazone, carfentrazone-ethyl, chlomethoxyfen, chlorphthalim, cinidon-ethyl, cyclopyranil, fluazolate, flufenpyr, flufenpyr-ethyl, flumioxazin, fluthiacet, fluthiacet-methyl, halosafen, lactofen, oxadiargyl, oxadiazon, pentoxazone, profluazol, pyraclonil, pyraflufen, pyraflufen-ethyl, saflufenacil, sulfentrazone, thidiazimin, tiafenacil, trifludimoxazin, epyrifenacil, N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxa-zin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0), 1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0), methyl (*E*)-4-[2-chloro-5-[4-chloro-5-(difluoromethoxy)-1*H*-methyl-pyra-zol-3-yl]-4-fluoro-phenoxy]-3-methoxy-but-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4); 2-[2-chloro-5-[3-chloro-5-(trifluoromethyl)-2-pyridinyl]-4-fluorophenoxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2 ,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1), 3-[2-chloro-5-[3,6-dihydro-3-methyl-2,6-dioxo-4-(trifluoromethyl)-1(2H)-pyrimidinyl]-4-fluorophenyl]-4,5-dihydro-5-methyl-5-isoxazolecarboxylic acid ethyl ester (CAS 1949837-17-5), and mixtures thereof.

Even more preferably, the PPO inhibitor is selected from the group consisting of saflufenacil, trifludimoxazin, epyrifenacil, 2-[2-[[3-chloro-6-[3,6-dihydro-3-methyl-2,6-di-oxo-4-(trifluoromethyl)-1(2H)-pyrimidinyl]-5-fluoro-2-pyridinyl]oxy]phenoxy] acetic acid ethyl ester (CAS 2158274-50-9), and mixtures thereof.

Specifically, the PPO inhibitor is 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (syn. ethyl 2-[2-[[3-chloro-5-fluoro-6-[3-methyl-2,6-dioxo-4-(trifluoromethyl)pyrimidin-1-yl]-2-pyridyl]oxy]phenoxy]acetate; CAS 2158274-50-9). This compound has the following formula:

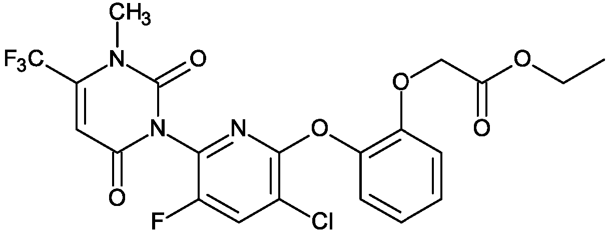

Preferably, in the phosphates of formula (I), R¹, R² and R³ are independently of each other linear or branched C₇-C₉ alkyl, more preferably linear or branched octyl, in particular n-octyl or 2-ethylhexyl. In particular, R¹, R² and R³ are 2-ethylhexyl, the phosphate (I) thus being tris(2-ethylhexyl)-phosphate (TEHP).

In a preferred embodiment, the PPO inhibitor is selected from the group consisting of saflufenacil, trifludimoxazin, epyrifenacil, 2-[2-[[3-chloro-6-[3,6-dihydro-3-methyl-2,6-di-oxo-4-(trifluoromethyl)-1(2H)-pyrimidinyl]-5-fluoro-2-pyridinyl]oxy]phenoxy] acetic acid ethyl ester (CAS 2158274-50-9), and mixtures thereof, and in the phosphates of formula (I), R¹, R² and R³ are independently of each other linear or branched octyl. In a particular embodiment, the PPO inhibitor is selected from the group consisting of saflufenacil, trifludimoxazin, epyrifenacil, 2-[2-[[3-chloro-6-[3,6-dihydro-3-methyl-2,6-di-oxo-4-(trifluoromethyl)-1(2H)-pyrimidinyl]-5-fluoro-2-pyridinyl]oxy]phenoxy] acetic acid ethyl ester (CAS 2158274-50-9), and mixtures thereof, and R¹, R² and R³ are 2-ethylhexyl, the phosphate (I) thus being tris(2-ethylhexyl)-phosphate. In a specific embodiment, the PPO inhibitor is 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), and the phosphate (I) is tris(2-ethylhexyl)-phosphate (TEHP).

In the composition of the invention, the at least one PPO inhibitor and the at least one phosphate ester of the formula (I) are preferably present in an overall weight ratio of from 10:1 to 1:1500. More preference is however given to the phosphate ester being present in at least equivalent amounts, preferably in excess. The at least one PPO inhibitor and the at least one phosphate ester of the formula (I) are thus more preferably present in an overall weight ratio of from 1:1 to 1:1500, more preferably from 1:1 to 1:1100, even more preferably from 1:2 to 1:1100, in particular from 1:2 to 1000, more particularly from 1:3 to 1:1000 and very particularly from 1:4 to 1:1000. In a specific embodiment, the at least one PPO inhibitor and the at least one phosphate ester of the formula (I) are present in an overall weight ratio of from 1:3 to 1:20, and specifically from 1:4 to 1:15.

The composition of the invention can principally take any form usual for herbicide compositions, i.e. it can be solid or liquid, diluted or concentrated. Preferably however, the composition is liquid. More preferably, the composition is liquid and concentrated, i.e. while liquid, it is not a tank mix or spray liquor. The liquid and concentrated composition of the invention typically contains the PPOI in a total concentration of at least 10 g/l, preferably at least 20 g/l, more preferably at least 30 g/l, e.g. at least 40 g/l or at least 45 g/l. The volume of 1 l refers to the volume at standard conditions, i.e. at 20°C and 1013 mbar.

Preferably, the composition is a liquid, concentrated composition, and the at least one PPO inhibitor is present in an overall concentration of 30 to 200 g, preferably 40 to 150, in particular 45 to 110 g per liter of the composition. Preferably, the at least one phosphate ester of the formula (I) is present in an overall concentration of 200 to 970 g, preferably 300 to 800 g, in particular 400 to 800 g per liter of the composition. More preferably, the composition is a liquid composition, and the at least one PPO inhibitor is present in an overall concentration of 30 to 200 g, preferably 40 to 150 g, in particular 45 to 110 g per liter of the composition, and the at least one phosphate ester of the formula (I) is present in an overall concentration of 200 to 970 g, preferably 300 to 800 g, in particular 400 to 800 g per liter of the composition.

In an alternatively preferred embodiment, the composition comprises the at least one PPO inhibitor in an overall amount of from 1 to 20% by weight, more preferably from 3 to 15% by weight and in particular from 4 to 12% by weight, e.g. from 5 to 11% by weight, relative to the total weight of the composition. In an alternatively preferred embodiment, the composition comprises the at least one phosphate ester of the formula (I) in an overall amount of from 20 to 99% by weight, more preferably from 35 to 85% by weight and in particular from 40 to 82% by weight, e.g. from 42 to 80% by weight, relative to the total weight of the composition.

The compositions of the invention may further comprise at least one further component selected from the group consisting of herbicides different from the PPO inhibitor(s), safeners, surfactants, rheology modifiers, organic solvents, anti-drift agents, adhesives, penetrants, antifoam agents, preservatives, antifreeze agents, antioxidants, and colorants which are usually employed in formulations of herbicides, especially in oil formulations. Examples for such further components are given below or known in the art. For example, suitable antifreeze agents are those from the group of the ureas, diols and polyols, such as ethylene glycol and propylene glycol. Suitable antifoams are those based on silicones. Suitable preservatives, colorants and perfumes are known to the skilled worker, for example from the literature mentioned above in connection with surfactants, and from Watkins, "Handbook of Insecticide Dust Diluents and Carriers", 2nd Ed., Darland Books, Caldwell N.J.; H. v. Olphen, "Introduction to Clay Colloid Chemistry"; 2nd Ed., J. Wiley & Sons, N.Y.; and C. Marsden, "Solvents Guide"; 2nd Ed., Interscience, N.Y. 1963.

In a preferred embodiment, the composition of the invention is an oil dispersion (also termed oil suspension concentrate) (OD), an oil-in-water emulsion (EW) or a suspoemulsion (SE). In particular, the composition of the invention is an oil dispersion.

An OD is a non-aqueous suspension concentrate, where one or more active ingredients are dispersed in form of finely divided solid particles in a water-immiscible dispersing fluid ("oil") as constant phase. The active ingredient is usually insoluble or only sparingly soluble (generally less than 2000 ppm) in the oil. The oil can vary from paraffinic to aromatic solvent types and vegetable oil or transesterified (e.g. methylated or ethylated) seed oils. In the present compositions, however, the dispersing fluid ("oil") comprises or, preferably, consists of the phosphate ester (I).

Oil-in-water emulsions (EW), also known as concentrated emulsions, are formulations that create a stable emulsion of the active ingredient in an aqueous phase, and are intended for dilution in water before use. The continuous phase is water. The active ingredient is normally a liquid that forms the dispersed oil phase. However, it is also possible to emulsify a solid or liquid active ingredient that is dissolved in a water-immiscible solvent. Water is incorporated into the formulation to form a stable oil-in-water emulsion through high shear.

Suspoemulsion (SE) formulations are a combination of suspension concentrate (SC) and concentrated aqueous emulsion (EW) technologies. They serve for combining two active ingredients with very different physical properties into one formulation. In terms of the present invention, if the composition is a SE, the first active ingredient is the PPOI, while the phosphate ester (I) acts as second "active ingredient".

As said, the composition of the invention is particularly preferably an oil dispersion. The OD may comprise, in addition to the at least one PPOI and the phosphate ester (I), at least one further component selected from the group consisting of surfactants, rheology modifiers and organic solvents. Further components suitable for incorporation into ODs may also be present.

The ODs may contain one or more surfactants, such as dispersants and/or emulsifying agents; these serve for stabilizing the active ingredient particles in the dispersing fluid and/or for assisting emulsification in water when diluting the OD with water prior to application.

Suitable surfactants are surface-active compounds, such as anionic, cationic, nonionic and amphoteric surfactants, block polymers, polyelectrolytes, and mixtures thereof. Such surfactants can serve as emulsifier, dispersant, solubilizer, wetter, penetration enhancer, protective colloid, or (additional) adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkyl¬naphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof.

Examples of alkoxylates are compounds such as alcohols, alkylphenols, amines, amides, arylphenols, fatty acids or fatty acid esters which have been alkoxylated with 1 to 50 equivalents of alkoxides. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolygluco-sides. Examples of polymeric surfactants are homo- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines.

Suitable amphoteric surfactants are alkylbetains and imidazolines.

Suitable block polymers are block copolymers of the A-B or A-B-A type comprising blocks of polyethylene oxide and polypropylene oxide, or of the A-B-C type comprising alkanol, polyethylene oxide and polypropylene oxide.

Suitable polyelectrolytes are polyacids or polybases. Examples of polyacids are alkali salts of polyacrylic acid or polyacid comb polymers. Examples of polybases are polyvinylamines or polyethyleneamines.

Among these surfactants, preference is given to block polymers, in particular to ethylene oxide (EO) / propylene oxide (PO) block copolymers, such as the Pluronic^{®} PE brands of BASF. Among these, in turn, preference is given to PO-EO block copolymers with 10 to 80% by weight, more preferably 10 to 60% by weight, in particular 10 to 50% by weight and specifically 20 to 40% by weight of polymerized EO, based on the total weight of the polymer. Preference is moreover given to nonionic alkoxylate surfactants, in particular to alcohols alkoxylated with EO, PO or both EO and PO. Preference is also given to the above anionic surfactants, in particular to the sulfosuccinates. More preferably, however, the surfactant comprises at least one block polymer, in particular at least one ethylene oxide (EO) / propylene oxide (PO) block copolymer, and optionally also one or more of the above-mentioned nonionic and anionic surfactants, in particular nonionic alkoxylate surfactants (specifically alcohols alkoxylated with EO, PO or both EO and PO) as nonionic surfactants, and anionic surfactants (specifically sulfosuccinates).

The total amount of surfactants, if present, will generally not exceed 55% by weight, in particular 50% by weight, based on the total weight of the OD, and is typically in the range from 1 to 55% by weight, in particular in the range from 3 to 50% by weight and specifically in the range of from 5 to 50% by weight or from 10 to 50% by weight or from 15 to 50% by weight, based on the total weight of the OD.

The ODs may additionally or alternatively comprise rheology modifiers. Suitable rheology modifiers are compounds which affect the rheological properties of the composition, even when used in small amounts. These include in particular all substances which increase the viscosity of oils (acting thus as thickeners), specifically those which are suitable for plant protection formulations.

Examples of suitable thickeners are:
(a) natural silicates and modified natural silicates, such as chemically modified bentonites, hectorites, attapulgites, montmorillonites, smectites or other silicate minerals, such as Bentone^{®} (Elementis), Attagel^{®} (Engelhard), Agsorb^{®} (Oil-Dri Corporation) or Hectorite^{®} (Akzo Nobel), preferably Bentone^{®},
(b) synthetic silicates or silicic acids, in particular highly disperse silicates and silicic acids from the Sipernat^{®}, Aerosil^{®} or Durosil^{®} series (Degussa), the CAB-O-SIL^{®} series (Cabot) or the Van Gel series (RT. Vanderbilt),
(c) organic thickeners, for example those based on hydrogenated fatty acids and fatty acid derivatives, such as thickeners from the Thixin^{®} or Thixatrol^{®} series (Elementis), and thickeners based on synthetic polymers, for example polyalkyl(meth)acrylates, polyamide thickeners, polyurethane thickeners, xanthan gum, for example the products sold under the name Rhodopol^{®} (Rhodia) and Kel-zan^{®} S (Kelco Corp.), and carboxymethylcellulose.

Among these, preference is given those based on natural or synthetic silicates and silicic acids, for example the substances mentioned in groups (a) and (b). Specifically, natural silicates or modified natural silicates are used.

The concentration of thickeners in the final ODs, if present, will generally not exceed 10% by weight, based on the total weight of the OD, and is preferably in the range from 0.01 to 7% by weight, in particular from 0.05 to 5% by weight and especially from 0.1 to 3% by weight or 0.1 to 1% by weight, based on the total weight of the final OD.

The OD may optionally further contain at least one organic solvent different from the phosphate ester (I). The solvent may be selected from C₁-C₁₂-alcohols, including alcohols having at least one ether group or at least one keto group; carboxylic acid esters with 3 to 16 carbon atoms, including diesters (e.g. dimethyl and diethyl esters of C₃-C₁₀-dicarboxylic acids) and C₂-C₆-lactones (e.g. C₃-C₅-lactones, in particular γ-butyrolactone); amides, ethers, ketones, aldehydes, N-alkyl-C₃-C₅-lactams (e.g. N-C₅-C₁₅-alkyl pyrrolidones, in particular N-C₅-C₈-alkyl pyrrolidones), N,N'-dimethyl-C₃-C₅-alkylene ureas, C₂-C₄-alkylene carbonates (e.g. propylene carbonate), tri-C₁-C₄-alkyl phosphates, DMSO and the like. Specifically, a C₂-C₄-alkylene carbonate, such as propylene carbonate, is used.

The total amount of solvents, if present, is preferably in the range from 0.01 to 5% by weight, in particular from 0.02 to 2% by weight, specifically from 0.05 to 1% by weight, based on the total weight of the OD.

The ODs can be prepared by methods known per se for the preparation of oil suspension concentrates, for example by mixing the components simultaneously or sequentially. Thus, it is possible for example to initially introduce the phosphate ester (I) and optionally a further organic solvent, if present, followed by the addition of the PPOI and, if present, surfactants, rheology additives and the other listed components, and, if appropriate residual amounts of the phosphate ester (I) and the organic solvent, if applicable. If appropriate, the phosphate ester (I) and the optional further organic solvent may also be mixed with a rheology additive before the remaining components are added. The resulting oil suspension can subsequently be subjected to fine-milling, if appropriate after a preliminary deagglomeration step. Milling and grinding are used synonymously herein to refer to any suitable physical attrition method, such as grinding, crushing or milling.

Customary mixing devices which, if appropriate, can be heated may be used for preparing the mixtures. For the preliminary deagglomeration step, it is possible to use, for example, high-pressure homogenizers or mills which operate on the rotor-stator principle, such as Ultra Turrax^{®} homogenizers, for example from IKA, or toothed colloid mills, for example from Puck. Apparatus which can be used for the fine-grinding step can be, for example, batchwise-operating bead mills, for example from Drais, or continuously-operating bead mills, for example from Bachofen. Depending on the properties of the components employed, and on process-engineering and safety aspects and economical reasons, the preparation process can be adapted and, if appropriate, a pre-grinding step or else a fine-grinding step can be dispensed with.

By means of the aforementioned one or more milling steps the particle sizes of any solid particles present in the ODs are typically reduced to below 20 µm, preferably to below 10 µm and in particular to below 5 µm (D₉₀-value).

The components which are employed for the preparation of the ODs may comprise, as secondary component, water, which is recovered in the oil dispersions according to the invention. Therefore, the oil dispersion according to the invention may comprise small amounts of water, in general no more than 5% by weight, in particular no more than 1% by weight, based on the total weight of the formulation.

The composition of the invention can also be a tank mix or spray liquor, preferably a tank mix or spray liquor obtained by mixing the above-described concentrated composition, preferably the above-described OD, with water and optionally one or more further herbicides. Preferably however, the composition of the invention is a concentrated composition, more preferably an OD.

The invention also relates to the use of the composition of the invention for combatting undesired vegetation or for protecting crop plants from undesired vegetation, and to a method of controlling or combatting undesired vegetation, which comprises applying the composition of the invention, in diluted or undiluted form, to plants, their environment and/or their seeds.

The application can take place under precision application conditions.

To be more precise, the compositions of the invention can be applied in combination with, or by utilizing smart agricultural technologies, such as precision agriculture, remote and proximate imaging and image recognition, or smart agricultural site management programs. These smart agricultural technologies typically include models, e.g. computer programs, that support the user by considering information from a wide variety of sources to increase the quality and yield of harvested material, reduce damage by pests, including the prediction of pest pressure and smart application of crop protection products, secure environmental protection, support quick and reliable agronomic decision making, reduce usage of fertilizers and crop protection products, reduce product residues in consumables, increase spatial and temporal precision of agronomical measures, automate processes, and enable traceability of measures.

Commercially available systems which include agronomic models are e.g. Field-Scripts^{™} from The Climate Corporation, Xarvio^{™} from BASF, AGLogic^{™} from John Deere, etc.

Information input for these models include but is not limited to soil data (e.g. pH, organic matter content, moisture level, nutrient content such as nitrogen, potassium, phosphorous and micronutrient content); information on the plants that are currently growing or that may grow at the area of interest including crop plants and/or weeds (e.g. type of plant, chlorophyl levels, biomass, growth stage, plant health, plant water status, plant growth models, genetic traits, biotic damage by infestation or infection with pests, abiotic damage as caused by drought or nutrient stress etc.); weather information (e.g. information on past and present, and forecast of future temperature, humidity, and /or precipitation); information on the location of the area and directly derivable information thereof (e.g. terrain features like altitude, slope, water bodies, sun exposure and hours of sunshine per day, vegetation period, etc.); information on pest pressure (e.g. information of the past or present occurrence of unwanted vegetation, fungal diseases and invertebrate pests at the area of interest, at neighboring areas, the region, or the vegetation zone); information on beneficial organisms (e.g. information of the past or present occurrence of beneficial organisms at the area of interest, at neighboring areas, the region, or the vegetation zone); and / or historic information of any of the aforementioned (e.g. information on previous seasons, or of an earlier point in time of the same season).

The information usable for precision agriculture may be based on input by at least one user, be accessible from external data sources and databases, or be based on sensor data. Data sources typically include proximate-detection systems like soil-borne sensors and remote sensing as may be achieved by imaging with unmanned airborne vehicles like drones, or satellites. Imaging technologies includes poly- and multispectral imagery in the UV-VIS, NIR and UV spectrum. Sensors may be included in an Internet-of-Things system and may be directly or indirectly connected to the processing unit, e.g. via a wireless network and/or cloud applications. The information is typically taken into account by at least one processing unit and used to provide recommendations, generate control signals (e.g. for the control of agricultural machinery like tractors, drones, irrigation systems, farm management systems and the like), and/or generate (digital) maps on the area of interest. These (digital) maps contain spatially and optionally temporally resolved information of the agricultural site, wherein the information may contain information directly gathered as described above, combinations thereof or derived thereof, such as pest pressure, nutrient levels, and the like. The recommendations, control signals and (digital) maps may relate to or be used for controlling the application of water, nutrients, agrochemical products, or plant propagation material to the field of interest, or for taking other management measures like tilling, physical or laser-induced weeding.

Typical technologies that are used in smart agricultural technologies include self-steering robots (such as tractors, harvesters, drones), artificial intelligence (e.g. machine learning), imaging technologies (e.g. image segmentation technologies), big data analysis, and model generation, cloud computing, and machine-to-machine communication.

Precision agriculture such as precision farming is characterized by spatially and/or temporally resolved, targeted application of active ingredients like pesticides, preferably the compositions according to the present invention, plant-growth-regulators, fertilizers, and/or water including the variation of application rates over the agronomic site, zone or spot application, and of the spatially and/or temporally resolved, targeted planting or seeding of desired plant propagation material to a agronomic site. Precision farming typically includes the use of geo-positioning technologies like GPS for gaining information on the location and boundaries of the area of interest, the utilized application equipment, sensing equipment and recorded data, and to control the actions of farm vehicles such as spraying. By combining geo-positioning data with (digital) maps, it is possible to (semi)-automate agricultural measures at the site of interest, e.g. by using (semi)-autonomous spraying or seeding equipment.

Precision farming may typically include the application of smart spraying equipment, e.g. spot spraying, and precision spraying at a farm, e.g. by irrigation systems, tractors, robots, helicopters, airplanes, unmanned aerial vehicles, such as drones. Such equipment usually includes input sensors (such as e.g. a camera) and a processing unit configured to analyze the input data and configured to provide a recommendation or decision based on the analysis of the input data to apply the compositions of the invention to the agronomic site, e.g. the soil or to control pests in a specific and precise manner. For example, weeds may be detected, identified, and/or classified from imagery acquired by a camera. Such identification and/ classification can make use of image processing algorithms, which may utilize artificial intelligence (e.g. machine learning algorithms), or decision trees.

In this manner, the methods and compositions described herein can be applied only at the required location, point in time and dose rate.

As said above, smart spraying equipment requires active ingredient formulations which live up to the high requirements of spot treatment. The formulations need to be stable and very uniform to allow a sufficiently constant concentration of the active ingredient in every droplet, and the droplets formed from the formulation need to have an optimum droplet size to show no or just small wind drift from the spot. These requirements are met by the present compositions. The phosphate ester as defined above improves the drop stability and/or homogeneity in a spray prepared from an aqueous composition comprising the PPO inhibitor as defined above.

The invention relates also to the use of a phosphate ester as defined above for improving the herbicidal activity of a PPO inhibitor as defined above.

The invention relates also to the use of a phosphate ester as defined above for improving the drop stability and/or homogeneity in a spray prepared from an aqueous composition comprising the PPO inhibitor as defined above.

The herbicidal compositions of the invention effect a very good control of vegetation in non-crop areas, especially at high application rates. In crops such as soybean, cotton, oilseed rape, flax, lentils, rice, sugar beet, sunflower, tobacco and cereals, such as, for example maize or wheat, they are active against broad-leaved weeds and grass weeds without inflicting substantial damage to the crop plants. This effect is particularly observed at low application rates.

Depending on the application method in question, the compositions of the invention can additionally be employed in a further number of crop plants to remove undesired plants. Crops which are suitable are, for example, the following:
Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa , Phaseolus lunatus, Phaseolus vulgaris, Picea abies, Pinus spec., Pisum sativum, Prunus armeniaca, Prunus avium, Prunus cerasus, Prunus dulcis, Prunus domesticua, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera and Zea mays.

In addition, the compositions of the invention can also be used in crops which tolerate the effect of herbicides as the result of breeding, including genetic engineering methods.

Furthermore, the compositions of the invention can also be used in crops which tolerate attack by insects or fungi as the result of breeding, including genetic engineering methods.

Moreover, it has been found that the compositions of the invention are also suitable for the defoliation and desiccation of plant parts, for which crops plants such as cotton, potato, oilseed rape, sunflower, soybean or field beans, in particular cotton, are suitable.

As desiccants, the compositions of the invention are particularly suitable for desiccating the aerial parts of crop plants such as potato, oilseed rape, sunflower and soybean. This makes possible the fully mechanical harvesting of these important crop plants.

Also of economic interest is to facilitate harvesting, which is made possible by concentrating within a certain period of time the dehiscence, or reduction of adhesion to the tree, in citrus fruit, olives or other species and varieties of pome fruit, stone fruit and nuts. The same mechanism, i.e. the promotion of the development of abscission tissue between fruit part or leaf part and shoot part of the plants is also essential for the controlled defoliation of useful plants, in particular cotton. Moreover, a shortening of the time interval within which the individual cotton plants mature leads to an increased fiber quality after harvesting.

Moreover, it has been found that the compositions of the invention are also suitable for the control of conifers, in particular of conifer seedlings which grow naturally, and specifically for the control of pine seedlings which grow naturally.

In general, the compositions of the invention described herein are useful for combating undesired vegetation. For this purpose, the compositions may be applied as such or are preferably applied after dilution with water. Preferably, for various purposes of end user application, a so-called aqueous spray-liquor is prepared by diluting the (concentrated) compositions of the invention, in particular the OD of the present invention with water, e.g. tap water. The spray-liquors may also comprise further constituents in dissolved, emulsified or suspended form, for example fertilizers, active substances of other groups of herbicidal or growth-regulatory active substances, further active substances, for example active substances for controlling animal pests or phytopathogenic fungi or bacteria, furthermore mineral salts which are employed for alleviating nutritional and trace element deficiencies, and nonphytotoxic oils or oil concentrates. As a rule, these constituents are added to the spray mixture before, during or after dilution of the formulations according to the invention.

The compositions of the invention can be applied by the pre-emergence or the post-emergence method. If the PPOI present in the composition is less well tolerated by certain crop plants, application techniques may be employed where the herbicidal compositions are sprayed, with the aid of the spraying apparatus, in such a way that the leaves of the sensitive crop plants ideally do not come into contact with them, while the active substances reach the leaves of undesired plants which grow underneath, or the bare soil surface (post-directed, lay-by).

Depending on the aim of the control measures, the season, the target plants and the growth stage, the formulations of the invention are applied to such a degree that the application rates of the PPOI are from 0.001 to 3.0, preferably from 0.01 to 1.0 kg/ha active substance (a.s.).

To widen the spectrum of action and to obtain synergistic effects, the compositions of the invention can be mixed with a large number of representatives of other groups of herbicidal or growth-regulatory active substances and applied together with these.

Examples of suitable mixing partners are 1,2,4-thiadiazoles, 1,3,4 thiadiazoles, amides, amino¬phosphoric acid and its derivatives, aminotriazoles, anilides, aryloxy/heteroaryl¬oxyalkanoic acids and their derivatives, benzoic acid and its derivatives, benzothia¬diazinones, 2-(hetaroyl/aroyl)-1,3-cyclohexanediones, heteroaryl aryl ketones, benzylisoxazolidinones, meta-CF3-phenyl derivatives, carbamates, quinolinecarboxylic acid and its derivatives, chloroacetanilides, cyclohexenone oxime ether derivatives, diazines, dichloropropionic acid and its derivatives, dihydrobenzofurans, dihydrofuran-3-ones, dinitroanilines, dinitrophenols, diphenyl ethers, dipyridyls, halocarboxylic acids and their derivatives, ureas, 3-phenyluracils, imidazoles, imidazolinones, N phenyl-3,4,5,6-tetrahydrophthalimides, oxadiazoles, oxiranes, phenols, aryloxy- and heteroaryloxyphenoxypropionic acid esters, phenylacetic acid and its derivatives, 2 phenyl¬propionic acid and its derivatives, pyrazoles, phenylpyrazoles, pyridazines, pyridine-carboxylic acid and its derivatives, pyrimidyl ethers, sulfonamides, sulfonylureas, triazines, triazinones, triazolinones, triazolecarboxamides and uracils.

It is of also possible to use the compositions of the present invention as a tank-mix partner with other formulations. Thus, the formulations of the invention can be mixed and applied together with a large number of different pesticide compound formulations, for example those that include active ingredients or adjuvants, such as atrazine, glyphosate, glufosinate, S-metolachlor, 2,4-D ester, isoxaflutole, diflufenzopyr, dicamba, mesotrione, dimethenamid-P, pendimethalin, imazethapyr, paraffin oils, polyol fatty acid esters, polyethoxylated polyol fatty acid esters, ethoxylated alkyl aryl phosphates, transesterified (e.g. methylated or ethylated) seed oils, emulsifiers, ammonium sulfate or mixtures thereof.

Moreover, it may be useful to apply the compositions of the invention, separately or in combination with other herbicides, jointly as a mixture with yet further plant protection agents, for example with agents for controlling pests or phytopathogenic fungi or bacteria.

The present invention is now further illustrated by the following non-limiting examples.

### EXAMPLES

Compound A is 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (syn. ethyl 2-[2-[[3-chloro-5-fluoro-6-[3-methyl-2,6-dioxo-4-(trifluoromethyl)pyrimidin-1-yl]-2-pyridyl]oxy]phenoxy]acetate; CAS 2158274-50-9) of the formula:

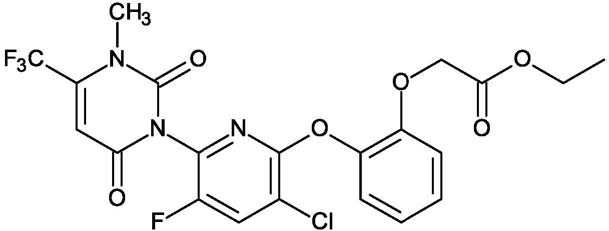

| | |
|---|---|
| TEHP: | tris(2-ethylhexyl)-phosphate; used in form of the commercial product Disflamoll^{®} TOF from Lanxess |
| Atlas^{™} G-5002L | polymeric emulsifier or wetting agent from Croda; butyl polyalkylene oxide block copolymer (polyalkoxylated butyl ether) |
| Bentone^{®} 38 | rheology modifier from Elementis; organic derivative of a hectorite clay |
| Lutensit^{®} A-BO | surfactant from BASF; sodium octylsulfosuccinate |
| Pluronic^{®} PE 6400 | surfactant from BASF; PO-EO-block polymer - approx. 40% polyethylene glycol in molecule |

### A. Preparation of the formulations

### A.1 Oil dispersions

Following OD formulations of compound A were prepared by adding TEHP, Lutensit A-BO, Atlas G-5002L, Pluronic PE 6400 and an activated premix of Bentone 38 in TEHP to a suitable vessel and homogenizing the mixture. Subsequently, compound A was added and homogenized in the mixture with an IKA Ultra-Turrax^{®} T18 device. This was followed by a subsequent wet milling step in a VMA-Getzmann Torusmill^{®} with a Dispermat^{®} dissolver for 180 minutes at 3000 rpm. The Bentone 38 premix in TEHP consisted of 4.5 g Bentone 38 and 1,81 g propylene carbonate in 67.15 g of Disflamoll^{®} TOF and was prepared by mixing and homogenizing all components and a subsequent milling step in a VMA-Getzmann Torusmill^{®} with a Dispermat^{®} dissolver for 5 minutes at 3500 rpm and 10 minutes at 4500 rpm.

| | OD1 | OD2 | OD3 | OD4 | OD5 | OD6 |
|---|---|---|---|---|---|---|
| Compound A | 100 g/l | 100 g/l | 75 g/l | 75 g/l | 50 g/l | 50 g/l |
| Atlas G-5002L | 124.8 g/l | 124.8 g/l | 114.31 g/l | 114.31 g/l | 113.19 g/l | 113.19 g/l |
| Bentone 38 | 3.61 g/l | 3.61 g/l | 3.61 g/l | 3.61 g/l | 4.5 g/ | 4.5 g/l |
| Lutensit A-BO | 30 g/l | 30 g/l | 30 g/l | 30 g/l | 30 g/l | 30 g/l |
| Pluronic PE 6400 | 50.25 g/l | 300.25 g/l | 50.25 g/l | 275.25 g/l | 50.25 g/l | 300.25 g/l |
| Propylene carbonate | 1.45 g/l | 1.45 g/l | 1.45 g/l | 1.45 g/l | 1.81 g/l | 1.81 g/l |
| TEHP | ad 1 l (680 g) | ad 1 l (464 g) | ad 1 l (704 g) | ad 1 l (508 g) | ad 1 l (718 g) | ad 1 l (501 g) |

The formulations are homogeneous, white opaque liquids with good flowability. After some time, serum formation develops but all samples are redispersible with no sediment formation.

As a representative example, the properties of OD1 are described in more detail in the following. OD1 was tested for active ingredient content (HPLC method), shear viscosity at a shear rate of 100 s⁻¹ at 20°C (rotational rheometry according to CIPAC MT 192), particle size distribution (PSD, light scattering and Fraunhofer evaluation according to CIPAC MT 187), pH and visual assessment before and after storage for 8 weeks at 40°C, respectively. The results of these measurements show that the formulation is stable except for serum formation. The serum formation is completely reversible, allowing for easy and homogeneous application of the formulation.

| Measurement results for OD1 | Initial | After 8 weeks at 40°C |
|---|---|---|
| Shear viscosity (mPas) | 150 | 168 |
| Active ingredient recovery with respect to initial | 100 | 95 |
| pH | 7,9 | 7,6 |
| PSD DV50% (µm) | 1,8 | 2,2 |
| PSD DV90% (µm) | 4,9 | 7,1 |
| Serum % | 0 | 57 |
| Optical assessment | homogeneous | well redispersible |

### B. Herbicidal activity

The herbicidal activity of the OD formulations of the invention against various undesirable plants was demonstrated by the following post-emergence treatment field experiments. To this end, the formulations were diluted and applied via spray application (pressurized backpack sprayer) and the herbicidal effects of these treatments were determined.

The spray liquors were prepared by dilution of the above ODs with water to levels so as to obtain the concentration of the adjuvant as stated in the below tables.

For comparative purposes, following formulations were used:
Comp-1: This is a suspension concentrate of Compound A in a concentration of 342.1 g of Compound A per 1 liter of the SC, diluted for the trials with water to the below concentration of Compound A. No adjuvant present.
Comp-2 and Comp-3: These are the above suspension concentrate of 342.1 g/l of Compound A described under Comp-1, however tank-mixed with methylated rapeseed oil ("MSO") as adjuvant and diluted with water so as to obtain the concentration of the adjuvant as stated in the below tables.

Field trials were carried out in summer and early autumn at various locations in the USA. One single post-emergence application was carried out. The sizes of the weed plants at the time of application were ca. 4-6 inches (ca. 10-15 cm). The plot sizes were width 6-10 feet (ca. 1.8-3 m), length 30 feet (ca. 9.1 m).

The spray volume was 10-15 gal/acre (ca. 112.3-168.5 I/ha), so that compound A was applied in an amount of 18.75 g/ha in each test (also in the comparative tests). The number of replications was 3.

The test period extended over ca. 2-3 weeks.

The evaluation for the damage caused by the chemical compositions was carried out using a scale from 0 to 100%, compared to the untreated control plants. Here, 0 means no damage and 100 means complete destruction of the plants.

The activity against following weeds was tested:

| EPPO code | Scientific name |
|---|---|
| AMAPA | *Amaranthus palmeri* |
| AMARE | *Amaranthus retroflexus* |
| AMATU | *Amaranthus tuberculatus* |
| BRAPP | *Brachiaria platyphylla* |
| DTTAE | *Dactyloctenium aegyptium* |
| ECHCG | *Echinocloa crus-galli* |
| KCHSC | *Bassia scoparia* |
| POROL | *Portulaca oleracea* |
| SETVI | *Setaria viridis* |

The results are compiled in the following tables.

### B.1 Herbicidal activity against AMAPA

The tests were carried out at Pine Level Research Farm, Princeton, North Carolina, USA.

**Table 1**

| | Adjuvant concentration [%] | Activity 13 DAT [%] |
|---|---|---|
| OD1 | 0.138 | 66 |
| OD2 | 0.088 | 72 |
| OD3 | 0.194 | 61 |
| OD4 | 0.134 | 65 |
| OD5 | 0.346 | 75 |
| OD6 | 0.201 | 61 |
| Comp-1 | - | 54 |
| Comp-2 | 0.5 | 71 |
| Comp-3 | 1.0 | 75 |

### B.2 Herbicidal activity against AMARE

The tests were carried out at North Dakota Research Farm, Davenport, North Dakota, USA.

**Table 2**

| | Adjuvant concentration [%] | Activity 14 DAT [%] | Activity 21 DAT [%] |
|---|---|---|---|
| OD1 | 0.138 | 96 | 90 |
| OD2 | 0.088 | 95 | 92 |
| OD3 | 0.194 | 93 | 85 |
| OD4 | 0.134 | 96 | 94 |
| OD5 | 0.346 | 98 | 95 |
| OD6 | 0.201 | 94 | 90 |
| Comp-1 | - | 47 | 50 |
| Comp-2 | 0.5 | 92 | 87 |
| Comp-3 | 1.0 | 98 | 98 |

### B.3 Herbicidal activity against DTTAE

The tests were carried out at Pine Level Research Farm in Princeton, North Carolina, USA.

**Table 3**

| | Adjuvant concentration [%] | Activity 13 DAT [%] |
|---|---|---|
| OD1 | 0.138 | 63 |
| OD2 | 0.088 | 60 |
| OD3 | 0.194 | 64 |
| OD4 | 0.134 | 74 |
| OD5 | 0.346 | 68 |
| OD6 | 0.201 | 73 |
| Comp-1 | - | 30 |
| Comp-2 | 0.5 | 58 |
| Comp-3 | 1.0 | 65 |

### B.4 Herbicidal activity against POROL

The tests were carried out at STV R&D Farm, Greenville, Mississippi, USA.

**Table 4**

| | Adjuvant concentration [%] | Activity 13 DAT [%] | Activity 21 DAT [%] |
|---|---|---|---|
| OD1 | 0.138 | 73 | 77 |
| OD2 | 0.088 | 78 | 80 |
| OD3 | 0.194 | 87 | 83 |
| OD4 | 0.134 | 88 | 87 |
| OD5 | 0.346 | 93 | 92 |
| OD6 | 0.201 | 93 | 93 |
| Comp-1 | - | 22 | 0 |
| Comp-2 | 0.5 | 75 | 73 |
| Comp-3 | 1.0 | 87 | 85 |

### B.5 Herbicidal activity against KCHSC

The tests were carried out at North Dakota Research Farm, Davenport, North Dakota, USA.

**Table 5**

| | Adjuvant concentration [%] | Activity 14 DAT [%] | Activity 21 DAT [%] |
|---|---|---|---|
| OD1 | 0.138 | 90 | 82 |
| OD2 | 0.088 | 92 | 89 |
| OD3 | 0.194 | 87 | 80 |
| OD4 | 0.134 | 95 | 92 |
| OD5 | 0.346 | 92 | 90 |
| OD6 | 0.201 | 90 | 83 |
| Comp-1 | - | 13 | 15 |
| Comp-2 | 0.5 | 89 | 85 |
| Comp-3 | 1.0 | 92 | 90 |

### B.6 Herbicidal activity against ECHCG

The tests were carried out at Beaver Crossing Site, Beaver Crossing, Nebraska, USA.

**Table 6**

| | Adjuvant concentration [%] | Activity 14 DAT [%] | Activity 21 DAT [%] |
|---|---|---|---|
| OD1 | 0.138 | 100 | 99 |
| OD2 | 0.088 | 93 | 99 |
| OD3 | 0.194 | 95 | 88 |
| OD4 | 0.134 | 100 | 99 |
| OD5 | 0.346 | 98 | 97 |
| OD6 | 0.201 | 98 | 99 |
| Comp-1 | - | 30 | 50 |
| Comp-2 | 0.5 | 97 | 87 |
| Comp-3 | 1.0 | 99 | 93 |

### B.7 Herbicidal activity against AMATU

The tests were carried out at Beaver Crossing Site, Beaver Crossing, Nebraska, USA.

**Table 7**

| | Adjuvant concentration [%] | Activity 14 DAT [%] | Activity 21 DAT [%] |
|---|---|---|---|
| OD1 | 0.138 | 95 | 90 |
| OD2 | 0.088 | 83 | 75 |
| OD3 | 0.194 | 95 | 92 |
| OD4 | 0.134 | 90 | 77 |
| OD5 | 0.346 | 91 | 92 |
| OD6 | 0.201 | 88 | 82 |
| Comp-1 | - | 53 | 58 |
| Comp-2 | 0.5 | 88 | 78 |
| Comp-3 | 1.0 | 92 | 85 |

### B.8 Herbicidal activity against SETVI

The tests were carried out at Beaver Crossing Site, Beaver Crossing, Nebraska, USA.

**Table 8**

| | Adjuvant concentration [%] | Activity 14 DAT [%] | Activity 21 DAT [%] |
|---|---|---|---|
| OD1 | 0.138 | 99 | 98 |
| OD2 | 0.088 | 93 | 100 |
| OD3 | 0.194 | 95 | 88 |
| OD4 | 0.134 | 100 | 99 |
| OD5 | 0.346 | 98 | 97 |
| OD6 | 0.201 | 97 | 98 |
| Comp-1 | - | 30 | 50 |
| Comp-2 | 0.5 | 96 | 87 |
| Comp-3 | 1.0 | 99 | 92 |

As the above results show, all formulations containing an adjuvant show a higher herbicidal activity than the formulation Comp-1 without adjuvant. The results show moreover that TEHP can be used in distinctly lower concentrations than MSO without compromising the herbicidal activity.

## Claims

1. A composition comprising
(a) at least one herbicide selected from protoporphyrinogen oxidase (PPO) inhibitors; and
(b) at least one phosphate ester or the formula (I) 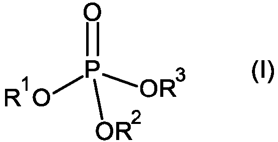
where R³, R² and R³, independently of each other, are C₆-C₁₂-alkyl.

2. The composition according to claim 1, where the PPO inhibitor is selected from the group consisting of acifluorfen, acifluorfen-sodium, azafenidin, bencarbazone, benzfendizone, bifenox, butafenacil, carfentrazone, carfentrazone-ethyl, chlomethoxyfen, chlorphthalim, cinidon-ethyl, cyclopyranil, fluazolate, flufenpyr, flufenpyr-ethyl, flumiclorac, flumiclorac-pentyl, flumioxazin, fluoroglycofen, fluoroglycofen-ethyl, fluthiacet, fluthiacet-methyl, fomesafen, halosafen, lactofen, oxadiargyl, oxadiazon, oxyfluorfen, pentoxazone, profluazol, pyraclonil, pyraflufen, pyraflufen-ethyl, saflufenacil, sulfentrazone, thidiazimin, tiafenacil, trifludimoxazin, epyrifenacil, N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-di-chloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0), 1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0), methyl (*E*)-4-[2-chloro-5-[4-chloro-5-(difluoromethoxy)-1*H*-methyl-pyrazol-3-yl]-4-fluoro-phenoxy]-3-methoxy-but-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4); 2-[2-chloro-5-[3-chloro-5-(trifluoromethyl)-2-pyridinyl]-4-fluorophe-noxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-di-hydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1), 3-[2-chloro-5-[3,6-dihydro-3-methyl-2,6-dioxo-4-(trifluoromethyl)-1(2H)-pyrimidinyl]-4-fluorophenyl]-4,5-dihydro-5-methyl-5-isoxazolecarboxylic acid ethyl ester (CAS 1949837-17-5), and mixtures thereof;
where preferably the PPO inhibitor is selected from the group consisting of azafenidin, bencarbazone, benzfendizone, butafenacil, carfentrazone, carfentrazone-ethyl, chlomethoxyfen, chlorphthalim, cinidon-ethyl, cyclopyranil, fluazolate, flufenpyr, flufenpyr-ethyl, flumioxazin, fluthiacet, fluthiacet-methyl, halosafen, lactofen, oxadiargyl, oxadiazon, pentoxazone, profluazol, pyraclonil, pyraflufen, pyraflufen-ethyl, saflufenacil, sulfentrazone, thidiazimin, tiafenacil, trifludimoxazin, epyrifenacil, N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-iso-indole-1,3-dione (CAS 1300118-96-0), 1-methyl-6-trifluoromethyl-3-(2,2,7-tri-fluoro-3-oxo-4-prop-2-ynyl-3,4-dihydro-2H-benzo[1,4]oxazin-6-yl)-1H-pyrimidine-2,4-dione (CAS 1304113-05-0), methyl (*E*)-4-[2-chloro-5-[4-chloro-5-(difluoro-methoxy)-1*H*-methyl-pyrazol-3-yl]-4-fluoro-phenoxy]-3-methoxy-but-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4); 2-[2-chloro-5-[3-chloro-5-(trifluoromethyl)-2-pyridinyl]-4-fluorophenoxy]-2-methoxyacetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1), 3-[2-chloro-5-[3,6-dihydro-3-methyl-2,6-dioxo-4-(trifluoromethyl)-1(2H)-pyrimidinyl]-4-fluorophenyl]-4,5-dihydro-5-methyl-5-isoxazolecarboxylic acid ethyl ester (CAS 1949837-17-5), and mixtures thereof.

3. The composition according to claim 2, where the PPO inhibitor is selected from the group consisting of saflufenacil, trifludimoxazin, epyrifenacil, 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), and mixtures thereof.

4. The composition according to claim 3, where the PPO inhibitor is 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9).

5. The composition according to any of the preceding claims, where R¹, R² and R³ are independently of each other linear or branched C₇-C₉ alkyl, preferably linear or branched octyl, in particular n-octyl or 2-ethylhexyl.

6. The composition according to claim 5, where R¹, R² and R³ are 2-ethylhexyl.

7. The composition according to any of the preceding claims, where the at least one PPO inhibitor and the at least one phosphate ester of the formula (I) are present in an overall weight ratio of from 10:1 to 1:1500, preferably 1:1 to 1:1100, more preferably 1:2 to 1:1000, in particular 1:3 to 1:20, specifically 1:4 to 1:15.

8. The composition according to any of the preceding claims, where the composition is a liquid composition, and the at least one PPO inhibitor is present in an overall concentration of 30 to 200 g, preferably 40 to 150 g, in particular 45 to 110 g per liter of the composition; and the at least one phosphate ester of the formula (I) is present in an overall concentration of 200 to 970 g, preferably 300 to 800 g, in particular 400 to 800 g per liter of the composition.

9. The composition according to any of the preceding claims, where the composition is an oil dispersion.

10. The composition according to any of the preceding claims, further comprising at least one further component selected from the group consisting of herbicides different from the PPO inhibitors as defined in any of claims 1 to 4, safeners, surfactants, rheology modifiers, and organic solvents; preferably further comprising at least one surfactant, at least one rheology modifier, and/or at least one organic solvent, more preferably further comprising a surfactant selected from ethylene oxide/propylene oxide block copolymers and optionally further comprising at least one further surfactant different therefrom, at least one rheology modifier, and/or at least one organic solvent.

11. The use of a composition as defined in any of claims 1 to 10 for combatting unwanted vegetation.

12. The use of a phosphate ester as defined in any of claims 1, 5 or 6 for improving the herbicidal activity of a PPO inhibitor as defined in any of claims 1 to 4.

13. The use of a phosphate ester as defined in any of claims 1, 5 or 6 for improving the drop stability and/or homogeneity in a spray prepared from an aqueous composition comprising the PPO inhibitor as defined in any of claims 1 to 4.

14. A method of combatting unwanted vegetation, comprising applying a composition as defined in any of claims 1 to 10 to plants, their seed and/or their habitat.

15. The method according to claim 14, where the application takes place under precision application conditions.
